# EUROPÄISCHE PATENTSCHRIFT

(11) **EP 2 054 638 B1**
(45) Veröffentlichungstag und Bekanntmachung des Hinweises auf die Patenterteilung: **16.03.2011**
(21) Anmeldenummer: 07802599.6
(22) Anmeldetag: 14.08.2007
(51) Int. Cl.: F16B 19/10

(54) **BEFESTIGUNGSCLIP**
FASTENING CLIP
CLIP DE FIXATION

(30) Priorität: 14.08.2006 DE 102006038040
(43) Veröffentlichungstag der Anmeldung: 06.05.2009
(73) Patentinhaber: Ford Global Technologies, LLC, Dearborn, MI 48126 (US)
(72) Erfinder: GANGAL, Manoj, Pune 411038 (IN); FREITAG, Jürgen, 40593 Düsseldorf (DE); DAWID, Martin, 42929 Wermelskirchen (DE); BOCK, Andreas, 40789 Monheim (DE)
(74) Vertreter: Dörfler, Thomas
(86) Internationale Anmeldenummer: PCT/EP2007/058404
(87) Internationale Veröffentlichungsnummer: WO 2008/020017

(56) Entgegenhaltungen:
- FR-A- 2 442 368
- FR-A- 2 876 166
- GB-A- 2 296 031

## Beschreibung

Die vorliegende Erfindung betrifft einen Befestigungsclip zur lösbaren Verbindung zweier oder mehrerer Teile eines Gegenstandes, insbesondere eines zumindest im Bereich der herzustellenden Verbindung mit einem weiteren, mit dem Clip verbundenen Teil, insbesondere eines Karosserieteiles mit einem geformten Verkleidungsteil aus Kunststoff für den Innenraum eines Kraftfahrzeuges, mit den Merkmalen des Oberbegriffs aus Anspruch 1 (GB 2 296 031).

Derartige Befestigungsvorrichtungen sind als rotationssymmetrische Pilze oder als im Querschnitt pilzförmige Profilabschnitte mit Schlitz in der Längsmittelebene bekannt, siehe zum Beispiel EP 1 369 304 A1. Dabei ist der Clip vorzugsweise an dem Verkleidungsteil, das durch Pressen, Extrudieren oder Spritzgießen hergestellt sein kann, einstückig angeformt. Bei der Befestigung wird eine Bohrung des zu befestigenden Teils über den Pilzkopf gebracht, die dann über den Pilzkopf gedrückt wird, wobei der Pilzkopf vermöge des Schlitzes bei seinem Durchgang durch die Bohrung quer zu seiner Längsmittelebene zusammengedrückt wird.

Dabei ist es erforderlich, daß das Verkleidungsteil mit dem angeformten Befestigungsclip zerstörungsfrei demontiert werden kann, d. h. das Verkleidungsteil und/oder die Befestigungsclipse dürfen bei der Demontage nicht zerstört werden, da, insbesondere wenn Befestigungsclipse und Verkleidungsteil einstückig ausgeführt sind, das komplette Verkleidungsteil ersetzt werden müsste. Ist das Gegenstück für den Clip ein Metallteil, kommt es sowohl beim Befestigen als auch beim Lösen der Clipverbindung zu einem nicht unerheblichen Abrieb des Kunststoffclip, infolge dessen die Haltekraft des Clip bei jeder Betätigungen der Clipverbindung nachlässt, so dass der Clip bereits nach wenigen Lösungen und Befestigungen nicht mehr die erforderliche Haltekraft gewährleistet. Man hat bereits versucht, das Nachlassen der Abzugskraft, die unmittelbar mit der Haltekraft der Clipverbindung korreliert ist, dadurch zu mildern, dass die Aufnahmeöffnung des Metallteils für den Clip mit asymmetrischen Flanken versehen wird, so dass die Reibung reduziert wird. Jedoch Haltekraft über viele Andruck- und Abzugsbetätigungen.

Der erfindungsgemäße Clip hat vorzugsweise die Form eines Profilabschnitts. Dabei kann das äußere Clipteil längs seiner Mittelebene geteilt sein und aus zwei symmetrischen Teilen bestehen, die durch einen Schlitz getrennt sind.

Andererseits kann der Clip auch rotationssymmetrisch ausgebildet sein, wobei das äußere Clipteil in Richtung der Clipachse segmentiert ist, d.h. aus 3 bis 8, vorzugsweise 4 bis 6 zur Clipachse parallelen identischen Segmenten bestehen kann. Ferner ist es möglich, den Clip mit senkrecht zur Clipachse quadratischem, rechteckigem, vieleckigem oder ovalem Querschnitt auszubilden mit entsprechender Segmentierung des äußeren Clipteils. Je nach konstruktiver Anforderung kann auch der innere Clipteil beispielsweise quadratischen Querschnitt und der äußere Clipteil runden Querschnitt aufweisen.

Weiter kann das innere Clipteil auf seiner Oberseite einen Steg aufweisen, der in angeclipsten Zustand in den Trennschlitz des äußeren Clipteils hineinragt, wobei der Steg besonders bevorzugt breiter ist als der Schlitz, so dass die Teile des äußeren Clipteils an der Oberseite durch den Steg gespreizt werden.

Seitlich zur Clipmittelebene bzw. Clipachse sind vorzugsweise mindestens ein, vorzugsweise zwei oder mehrere symmetrisch zur Clipmittelebene bzw. Clipachse angeordnete Gegenlager für das anzuclipsende Teil vorgesehen, die mit der Basis verbunden sind.

Das äußere Clipteil ist vorzugsweise über flexible, sich seitlich zur Clipmittelebene bzw. Clipachse erstreckende Elemente im wesentlichen nicht kraftaufnehmend mit sind hierdurch nur geringe Verbesserungen erzielbar.

Aufgabe der Erfindung ist es daher, einen Befestigungsclip zur Verfügung zu stellen, der ein Lösen und Befestigen der Verbindung bei geringen Toleranzen der Abzugskraft auch nach mehreren Andruck- und Abzugsbetätigungen erlaubt. Eine weitere Aufgabe ist es, daß der Befestigungsclip einstückig mit dem zu befestigenden Verkleidungsteile ausgeführt sein kann.

Es wurde gefunden, dass diese Aufgaben dadurch gelöst werden, wenn der Clip als Doppelclip ausgebildet wird mit den Merkmalen aus Anspruch 1.

Vorzugsweise weist das äußere Clipteil eine innere Rastnase und das innere Clipteil eine korrespondierende äußere Rastnut auf.

Sowohl das innere Clipteil als auch das äußere Clipteil werden aus Kunststoff, vorzugsweise aus PP+EPDM und/oder mit Talk-verstärktem PP, gefertigt. Die Reibung zwischen den Kunststoffteilen ist erheblich geringer, als zwischen Metall und Kunststoff. Da Reibung zwischen Metall und Kunststoff bei dem erfindungsgemäßen Clip im Wesentlichen vermieden wird, kann eine Nacharbeitung der Flanken der Aufnahmeöffnung des zu befestigenden Metallteils zur Verbesserung der Gleiteigenschaften weitestgehend entfallen. Der erfindungsgemäße Clip behält seine Andruck- und Abzugskraft und damit seine der Basis und/oder der dem Clip zugewandten Seite des bzw. der Gegenlager verbunden.

Die Unterseite des Pilzkopfes des inneren Clipteils kann eben ausgebildet sein, mit einer zur leichteren Lösung der Clipverbindung abgerundeten Rastkante oder vorzugsweise keilförmig oder konisch mit Erweiterung nach oben ausgebildet sein, wobei die Unterseite einen nach oben öffnenden Konus- oder Keilwinkel von 50 bis 70° aufweist. Die innere Nase des äußeren Clipteils ist vorzugsweise korrespondierend ausgebildet, so dass diese in angeclipsten Zustand an der Rastkante anliegt.

Die Oberseite des Pilzkopfes des inneren Clipteils weist vorzugsweise zumindest in dem Bereich, in dem die Innenseite des äußeren Clipteils beim Einclipsen aufgleitet, einen nach unten öffnenden Konus- bzw. Keilwinkel von 30 bis 55° auf.

Der erfindungsgemäße Befestigungsclip kann aus gummielastischem Material bestehen, bevorzugt besteht dieser aus einem elastomeren Kunststoffmaterial, insbesondere einem thermoplastischen Elastomeren.

Bevorzugt findet der Befestigungsclip Verwendung bei der Befestigung von Verkleidungsteilen, insbesondere von Fahrzeugen und dort insbesondere bei der Befestigung von Verkleidungsteilen im Innenraum des Fahrzeugs. Die Verwendung des Befestigungsclips ist jedoch nicht darauf beschränkt, sondern er kann überall dort eingesetzt werden, wo ein Teil mit einem anderen mittels Clipverbindung lösbar verbunden werden soll und insbesondere mehrfach zerstörungsfrei demontiert werden muß, also Verkleidungsteile aller Art in Bauwerken, Möbeln, Flugzeugen, Schiffen usw. Die Teile selbst können alle einzuclipende Teile sein wie z.B. auch Kabelhalter, Montagehalter usw.

Vorteilhaft ist der Befestigungsclip mit dem zu montierendem Teil einstückig ausgeführt. Dabei kann der Befestigungsclip aus dem gleichen Material wie das Teil sein oder aus einem anderen, z. B. elastischeren Material und/oder einem Material mit besseren Gleiteigeneigenschaften und/oder aus einem abriebfesteren Material. Dies erlaubt die kostengünstige Herstellung des Teiles selber sowie die kostengünstige und sichere Montage, da der Befestigungsclip nicht am Teil vormontiert werden muß und er auch nicht falsch am Teil vormontiert werden kann. Damit reduziert sich insgesamt der Montageaufwand für ein Teil mit dem erfindungsgemäßen Befestigungsclip erheblich.

Die Erfindung wird anhand der beigefügten Figuren ohne Beschränkung der Allgemeinheit der Beschreibung näher erläutert:
- Figur 1: zeigt schematisch einen erfindungsgemäßen Befestigungsclip als Seitenansicht eines als Profilabschnitt ausgebildeten erfindungs- gemäßen Befestigungsclip oder als Schnitt durch einen rotations- symmetrischen Clip (ohne Darstellung der Segmentierung des äußeren Clipteils).
- Figur 2: zeigt einen erfindungsgemäßen Clip gemäß Fig. 1, jedoch in angeclipstem Zustand.
- Figur 3: zeigt einen als Profilabschnitt ausgebildeten erfindungsgemäßen Clip gemäß Fig. 2 in angeclipstem Zustand, jedoch ohne angeclipstes Teil.
- Figur 4: zeigt eine weitere Ausführung eines erfindungsgemäßen Befestigungsclip, wobei die Darstellung der in Figur 1 entspricht.
- Figur 5: zeigt einen erfindungsgemäßen Clip gemäß Fig. 4 im angeclipstem Zustand.

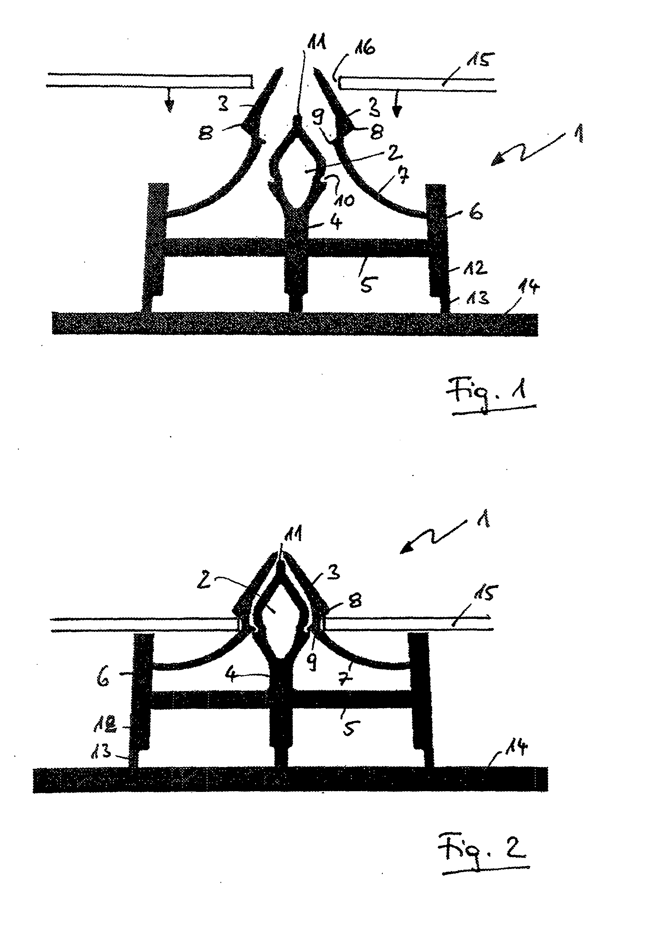

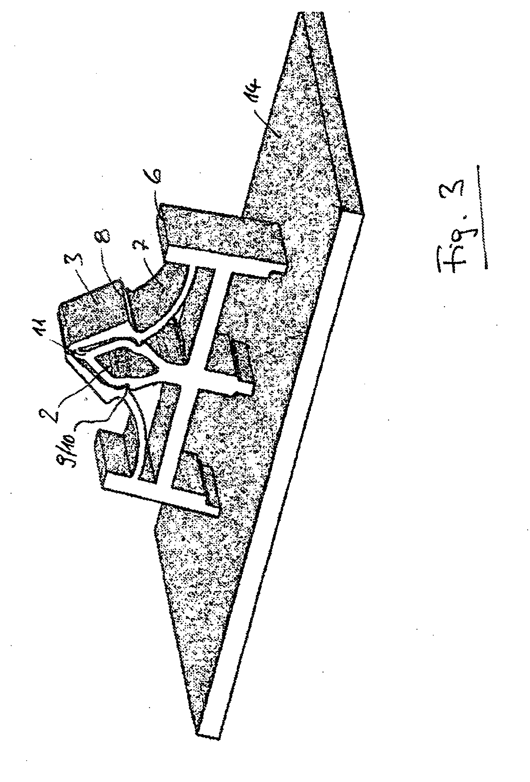

Der in den Figuren 1 bis 3 dargestellte Clip 1 besteht aus einem inneren Clipteil 2, das vorzugsweise als Hohlkörper ausgebildet ist, und einem diesen umfassenden, geteilten bzw. segmentierten äußeren Clipteil 3. Das innere Clipteil 2 ist über ein Halteelement 4 kraftaufnehmend mit der Basis 5 verbunden. Seitlich vom inneren Clipteil 2 sind Stützen bzw. Gegenlager 6 ebenfalls mit der Basis 5 verbunden. Die Teile das äußeren Clipteils 3 sind über flexible Elemente 7 mit der Basis 5, hier über die Stützen 6, verbunden. Das äußere Clipteil weist eine äußere Rastnase 8 zur Umfassung des anzuclipsenden Teils 15 und eine innere Rastnase 9 zur Verrastung mit der Rastnut 10 des inneren Clipteils 2 auf. Die innere Rastnase 9 ist vorzugsweise, wie dargestellt, in Bezug auf die Anclipsbewegung unterhalb der äußeren Rastnase 8 angeordnet. Das innere Clipteil 2 weist auf seiner Oberseite ferner einen Steg 11 auf, der in angeclipstem Zustand (Fig. 2) die oberen Enden des äußeren Clipteils 2 spreizt. In der dargestellten Ausführungsform der Erfindung ist die Basis 5 des Clip 1 über Stützen 12 mit dem einen zu verbindenden Teil 14 verbunden, wobei die Stützen 12 an ihrem Fuß Verjüngungen 13 aufweisen, die eine parallelogrammartige seitliche Bewegung der Basis 4 beim Anclipsen ermöglichen.

Beim Anclipsen wird das anzuclipsende Teil 15 mit der Aufnahmeöffnung 16 über den Clip 1 gebracht. Bei Annähern des Teils 15 an den Clip 1 in Richtung der Clipachse werden zunächst die Teile des äußeren Clipteils 3 gegeneinander bewegt bis die Rastnase 9 des äußeren Clipteils 3 auf dem Pilzkopf des inneren Clipteils 2 anliegt. Die Aufnahmeöffnung 16 kann dann über die äußere Rastnase 8 des äußeren Clipteils 3 gleiten. Nachdem die Rastnase 8 die Aufnahmeöffnung 16 oben umgreift, wird durch Druck das innere Clipteil 3 senkrecht zur Achse bzw. Mittelebene zusammengedrückt, so dass die innere Rastnase 9 des äußeren Clipteils 3 in die Rastnut 10 des inneren Clipteils 2 einrastet. Beim Lösen der Clipverbindung wird durch Zug in Richtung der Clipachse zunächst die Verrastung der inneren Rastnase 9 des äußeren Clipteils 3 mit der Rastnut 10 des inneren Clipteils 2 gelöst, und danach die Aufnahmeöffnung 16 über die äußere Rastnase 8 des äußeren Clipteils 3 gezogen.

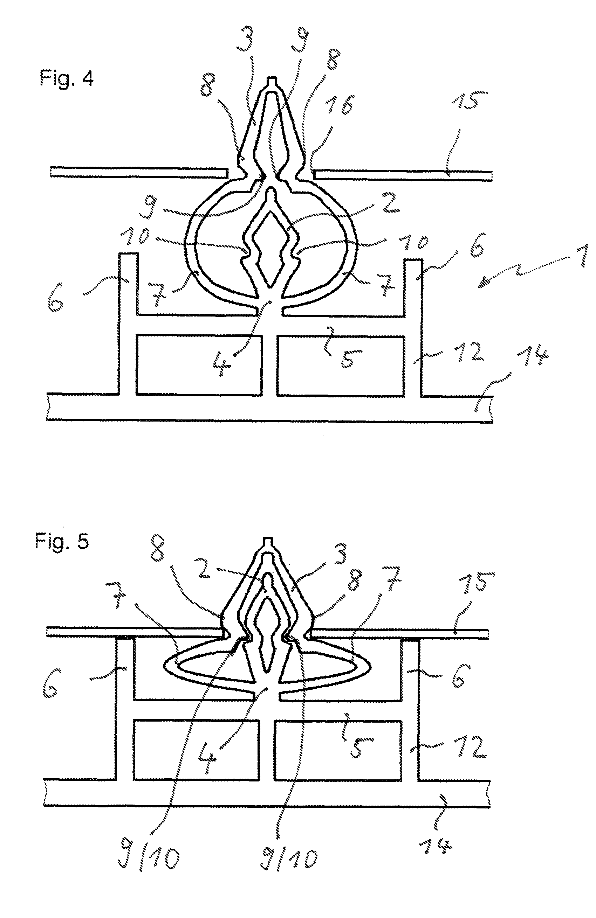

Der in den Figur 4 und 5 dargestellte Clip 1 weist einen prinzipiell gleichen Aufbau wie der in den Figuren 1 bis 3 beschriebene Clip auf. Er besteht ebenfalls aus einem inneren Clipteil 2 und einem diesen umfassenden äußeren Clipteil 3. Das innere Clipteil 2 ist über ein Halteelement 4 kraftaufnehmend mit der Basis 5 verbunden. Seitlich vom inneren Clipteil 2 sind Stützen bzw. Gegenlager 6 ebenfalls mit der Basis 5 verbunden. Die Teile das äußeren Clipteils 3 sind über flexible Elemente 7 direkt mit dem Haltelement 4 verbunden. Dabei bilden die flexiblen Elemente 7 ansatzweise Teilkreise und umschließen dabei das innere Clipteil 2. Das äußere Clipteil weist eine äußere Rastnase 8 zur Umfassung des anzuclipsenden Teils 15 und eine innere Rastnase 9 zur Verrastung mit der Rastnut 10 des inneren Clipteils 2 auf. Die innere Rastnase 9 ist vorzugsweise, wie dargestellt, in Bezug auf die Anclipsbewegung unterhalb der äußeren Rastnase 8 angeordnet.

Das Anclipsen und Lösen erfolgt wie oben bereits beschrieben. Der Unterschied liegt in der Verformung der flexiblen Elemente 7, die hier von einer annährenden Kreisform in eine ovale Form gedrückt werden. Mit dieser Ausführung der flexiblen Elemente 7 kann eine relativ große Verformung des äußeren Clipsteiles 3 realisiert werden, ohne daß die flexiblen Elemente 7 beschädigt werden. Damit wird auch bei mehrmaligem Anclipsen und Lösen des Teils 14 vom Teil 15 der Clips 1 nicht beschädigt.

## Patentansprüche

1. Befestigungsclip, ein inneres (2) und ein äußeres (3) Clipteil aufweisend, wobei das äußere Clipteil (3) das innere Clipteil (2) umfasst und eine äußere Nase (8) zur Umfassung der Aufnahmeöffnung des anzuclipsenden Teils aufweist, und wobei die Außenseite des inneren Clipteils (2) mit der Innenseite des äußeren Clipteils (3) über Nut und Nase (9, 10) verrastbar sind, **dadurch gekennzeichnet, dass** das äußere und innere Clipteil über das Halteelement (4) bzw. das Befestigungselement (7) an der Basis (4) angeformt sind.

2. Befestigungsclip nach Anspruch 1 in Form eines Profilabschnitts.

3. Befestigungsclip nach Anspruch 2, wobei das äußere Clipteil aus zwei bezüglich der Längsmittelebene symmetrischen Teilen besteht.

4. Befestigungsclip nach Anspruch 1, der rotationssymmetrisch ausgebildet ist und wobei das äußere Clipteil parallel zur Clipachse segmentiert ist.

5. Befestigungsclip nach Anspruch 4, wobei das äußere Clipteil aus mehreren zur Clipachse symmetrischen Teilen besteht, deren Zahl der Segmentierung entspricht.

6. Befestigungsclip nach einem der Ansprüche 1 bis 5, eine Basis (5) aufweisend, wobei das innere Clipteil mittels eines Halteelementes (4) Haltekraft-aufnehmend mit der Basis (5) verbunden ist.

7. Befestigungsclip nach einem der Ansprüche 1 bis 6, wobei das äußere Clipteil (3) über flexible, im wesentlichen seitwärts zur Clipachse bzw. Clipmittelebene verlaufende Befestigungselemente (7) im wesentlichen nicht kraftaufnehmend mit der Basis (4) verbunden ist.

8. Befestigungsclip nach einem der Ansprüche 1 bis 7, wobei das innere Clipteil (2) als Hohlkörper ausgebildet ist und das äußere Clipteil (3) in angeclipstem Zustand an dem inneren Clipteil (2) anliegt.

9. Befestigungsclip nach einem der Ansprüche 1 bis 8, wobei das äußere Clipteil (3) symmetrisch zur Clipachse bzw. Clipmittelebene geteilt ist und das innere Clipteil (2) einen Steg (11) aufweist, der in angeclipstem Zustand die Teile des äußeren Clipteils (3) trennt.

10. Befestigungsclip nach einem der Ansprüche 1 bis 9, wobei seitlich zur Clipachse bzw. Clipmittelebene Gegenlager (6) für das anzuclipsende Teil vorgesehen sind.

## Claims

1. Fastening clip, having an inner clip part (2) and an outer clip part (3), wherein the outer clip part (3) encompasses the inner clip part (2) and has an outer lug (8) for encompassing the receiving opening of the part to be clipped on, and wherein the outside of the inner clip part (2) can be latched to the inside of the outer clip part (3) via a groove and lug (9, 10), **characterized in that** the outer and inner clip parts are integrally formed on the base (5) via the retaining element (4) and the fastening element (7).

2. Fastening clip according to Claim 1 in the form of a profile section.

3. Fastening clip according to Claim 2, wherein the outer clip part consists of two parts which are symmetrical with respect to the longitudinal centre plane.

4. Fastening clip according to Claim 1, which is of rotationally symmetrical design, and wherein the outer clip part is segmented parallel to the clip axis.

5. Fastening clip according to Claim 4, wherein the outer clip part consists of a plurality of parts which are symmetrical to the clip axis and the number of which corresponds to the segmentation.

6. Fastening clip according to one of Claims 1 to 5, having a base (5), wherein the inner clip part is connected to the base (5) by means of a retaining element (4) in a manner absorbing the retaining force.

7. Fastening clip according to one of Claims 1 to 6, wherein the outer clip part (3) is connected to the base (5) in a manner substantially not absorbing force, via flexible fastening elements (7) running substantially sideways to the clip axis or clip centre plane.

8. Fastening clip according to one of Claims 1 to 7, wherein the inner clip part (2) is designed as a hollow body, and the outer clip part (3) bears against the inner clip part (2) in the clipped-on state.

9. Fastening clip according to one of Claims 1 to 8, wherein the outer clip part (3) is divided symmetrically to the clip axis or clip centre plane, and the inner clip part (2) has a web (11) which, in the clipped-on state, separates the parts of the outer clip part (3).

10. Fastening clip according to one of Claims 1 to 9, wherein counterbearings (6) for the part to be clipped on are provided laterally to the clip axis or clip centre plane.

## Revendications

1. Clip de fixation présentant une partie de clip intérieure (2) et extérieure (3), la partie de clip extérieure (3) entourant la partie de clip intérieure (2) et présentant un nez extérieur (8) pour entourer l'ouverture de réception de la partie à enclipser, et le côté extérieur de la partie de clip intérieure (2) pouvant être encliqueté avec le côté intérieur de la partie de clip extérieure (3) par le biais d'une rainure et d'un nez (9, 10), **caractérisé en ce que** les parties de clip intérieure et extérieure sont façonnées par-dessus un élément de retenue (4) ou un élément de fixation (7) sur la base (5).

2. Clip de fixation selon la revendication 1, en forme de portion profilée.

3. Clip de fixation selon la revendication 2, dans lequel la partie de clip extérieure se compose de deux parties symétriques par rapport au plan médian longitudinal.

4. Clip de fixation selon la revendication 1, qui est réalisé avec une symétrie de révolution et dans lequel la partie de clip extérieure est segmentée parallèlement à l'axe du clip.

5. Clip de fixation selon la revendication 4, dans lequel la partie de clip extérieure se compose de plusieurs parties symétriques par rapport à l'axe du clip, dont le nombre correspond à la segmentation.

6. Clip de fixation selon l'une quelconque des revendications 1 à 5, présentant une base (5), la partie de clip intérieure étant connectée à la base (5) au moyen d'un élément de retenue (4) en recevant la force de retenue.

7. Clip de fixation selon l'une quelconque des revendications 1 à 6, dans lequel la partie de clip extérieure (3) est connectée à la base (5) par le biais d'éléments de fixation flexibles (7) s'étendant essentiellement latéralement par rapport à l'axe du clip ou au plan médian du clip, sensiblement sans recevoir la force.

8. Clip de fixation selon l'une quelconque des revendications 1 à 7, dans lequel la partie de clip intérieure (2) est réalisée sous forme de corps creux et la partie de clip extérieure (3) s'applique dans l'état enclipsé contre la partie de clip intérieure (2).

9. Clip de fixation selon l'une quelconque des revendications 1 à 8, dans lequel la partie de clip extérieure (3) est divisée symétriquement par rapport à l'axe du clip ou au plan médian du clip et la partie de clip intérieure (2) présente une nervure (11) qui, dans l'état enclipsé, sépare les parties de la partie de clip extérieure (3).

10. Clip de fixation selon l'une quelconque des revendications 1 à 9, dans lequel des contre-paliers (6) pour la partie à enclipser sont prévus latéralement par rapport à l'axe du clip ou au plan médian du clip.
